Europäisches Patentamt

European Patent Office

Office européen des brevets

(11) Veröffentlichungsnummer: **0 502 410 A1**

# EUROPÄISCHE PATENTANMELDUNG

(21) Anmeldenummer: **92103244.7**

(22) Anmeldetag: **26.02.92**

(51) Int. Cl.5: **H01S 3/094**, H01S 3/06

(30) Priorität: **04.03.91 DE 4106777**

(43) Veröffentlichungstag der Anmeldung:
**09.09.92 Patentblatt 92/37**

(84) Benannte Vertragsstaaten:
**AT BE CH DE DK ES FR GB IT LI NL SE**

(71) Anmelder: **Standard Elektrik Lorenz Aktiengesellschaft**
**Lorenzstrasse 10**
**W-7000 Stuttgart 40(DE)**

(72) Erfinder: **Wedding, Berthold, Dr.**
**Hebbelstrasse 8**
**W-7015 Korntal 2(DE)**

(74) Vertreter: **Kugler, Hermann, Dipl.-Phys. et al**
**Standard Elektrik Lorenz AG Patent- und**
**Lizenzwesen Postfach 30 09 29**
**W-7000 Stuttgart 30(DE)**

(54) **Optischer Verstärker.**

(57) Optische Verstärker dienen zur Verstärkung von Lichtsignalen, die in Lichtwellenleitern übertragen und durch Dämpfung abgeschwächt werden, so daß sie verstärkt werden müssen. Ein optischer Verstärker weist ein Lichtsignalverstärkungs-Faserstück (2) mit einem Lichtsignale verstärkenden Kern (3) und einem Mantel (4) sowie einen Pumplaser (1) zum Einstrahlen von Pumplicht auf.

Erfindungsgemäß ist der Pumplaser (1) so angeordnet, daß das Pumplicht seitlich durch den Mantel (4) in den Kern (3) des Lichtsignalverstärkungs-Faserstücks (2) eingestrahlt wird. Ein sonst bei optischen Verstärkern üblicher Lichtwellenleiterkoppler zur Einspeisung des Pumplichts in den Kern (3) wird nicht benötigt.

FIG.1

EP 0 502 410 A1

Die Erfindung bezieht sich auf einen optischen Verstärker nach dem Oberbegriff des Patentanspruchs 1.

Optische Verstärker dienen zur Verstärkung von Lichtsignalen, die in Lichtwellenleitern übertragen und durch Dämpfung abgeschwächt werden, so daß sie verstärkt werden müssen. Um die Lichtsignale zu verstärken, weisen die optischen Verstärker ein Lichtsignalverstärkungs-Faserstück auf. Das Lichtsignalverstärkungs-Faserstück enthält in seinem Kern eine laseraktive Substanz, z.B. eine Erbium-Verbindung, die durch Pumplicht aus einem Pumplaser, z.B. einem Halbleiterlaser, angeregt wird und durch die die Lichtsignale verstärkt werden.

Aus Electronics Letters 26 (1990), S. 532-533, ist ein derartiger optischer Verstärker mit einem Erbium-dotierten Lichtsignalverstärkungs-Faserstück bekannt. Er weist in Übertragungsrichtung der Lichtsignale vor dem Lichtsignalverstärkungs-Faserstück einen Lichtwellenleiterkoppler auf, über den Pumplicht aus einem Multi-Quantum-Well-Halbleiterlaser in das Lichtsignalverstärkungs-Faserstück eingestrahlt wird.

In Übertragungsrichtung der Lichtsignale hinter dem Lichtsignalverstärkungs-Faserstück ist ein Filter vorhanden, das als Interferenzfilter ausgebildet ist. Es dient zur Absorption desjenigen Pumplichts, das in dem Lichtsignalverstärkungs-Faserstück nicht absorbiert wurde und dessen Übertragung in dem Lichtwellenleiter zu einer Empfangseinrichtung unterdrückt werden soll, weil es Störungen verursachen kann.

Es ist die Aufgabe der Erfindung, einen optischen Verstärker der eingangs genannten Art zu schaffen, der ohne einen Lichtwellenleiterkoppler funktioniert.

Die Aufgabe wird, wie in Patentanspruch 1 angegeben, gelöst. Ausgestaltungen sind den Unteransprüchen zu entnehmen.

Ein erfindungsgemäßer optischer Verstärker hat den Vorteil, daß sich das Pumplicht auf einfache Weise in ihn einkoppeln läßt. Es entfällt das Verspleißen des Lichtwellenleiterkopplers zwischen einem Lichtwellenleiter und dem Lichtsignalverstärkungs-Faserstück.

Da das Pumplicht seitlich durch den Mantel in den Kern des Lichtsignalverstärkungs-Faserstücks und somit senkrecht zur Übertragungsrichtung der Lichtsignale eingestrahlt wird, kann sich höchstens ein geringfügiger Teil des Pumplichts aus dem Kern des Lichtsignalverstärkungs-Faserstücks in die angrenzenden Lichtwellenleiter ausbreiten. Dadurch erübrigt sich auch ein Filter zur Absorption des nicht in dem Lichtsignalverstärkungs-Faserstück absorbierten Pumplichts.

Bei der Ausgestaltung, bei der in Strahlrichtung des Pumplichts hinter dem Lichtsignalverstärkungs-Faserstück ein Spiegel mit einer konkaven Wölbung vorhanden ist, läßt sich auch dasjenige Pumplicht ausnützen, das an dem Kern vorbeigestrahlt ist oder nicht in ihm absorbiert worden ist. Dieser Anteil des Pumplichts wird durch den Spiegel auf den Kern zurückreflektiert. Auf diese Weise läßt sich der Wirkungsgrad der Einkopplung des Pumplichts in den Kern erhöhen.

Vorteilhaft ist es auch, bereits das einstrahlende Pumplicht durch eine optische Einrichtung, z.B. eine Linse, auf den Kern zu fokussieren, weil sich dadurch die Ausbeute erhöht.

Besonders vorteilhaft läßt sich das Pumplicht ausnutzen, wenn es gleichzeitig auf mehrere Abschnitte des Lichtsignalverstärkungs-Faserstücks eingestrahlt wird.

Dies wird erreicht durch eine wendelförmige Aufwicklung des Lichtsignalverstärkungs-Faserstücks, bei der übereinanderliegende Abschnitte durch einen einzigen Pumplaser mit Pumplicht bestrahlt werden. Andere vorteilhafte Weiterbildungen der Erfindung sind den übrigen Patentansprüchen zu entnehmen.

Wenn bei dieser Anordnung gleichzeitig mehrere Pumplaser Pumplicht auf das Lichtsignalverstärkungs-Faserstück einstrahlen, läßt sich der optische Verstärker auch bei Ausfall eines Pumplasers weiterbetreiben.

Im folgenden wird die Erfindung anhand der Zeichnungen in Beispielen erläutert. Es zeigen:

Fig. 1    den Querschnitt eines optischen Verstärkers in vergrößerter Darstellung,

Fig. 2    den Querschnitt eines optischen Verstärkers, bei dem das Lichtsignalverstärkungs-Faserstück eine wendelförmige Aufwicklung bildet, und

Fig. 3    die Draufsicht des optischen Verstärkers nach Fig. 2 mit mehreren Pumplasern.

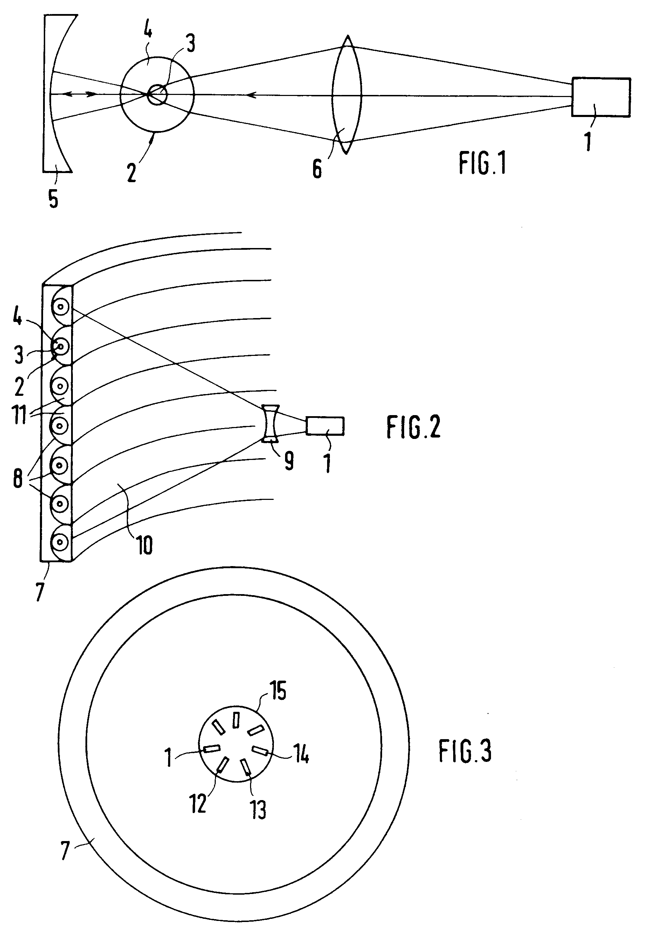

Fig. 1 zeigt einen Pumplaser 1, aus dem Pumplicht in ein Lichtsignalverstärkungs-Faserstück 2 eingestrahlt wird. Der Pumplaser 1 ist beispielsweise ein Halbleiterlaser. Das Lichtsignalverstärkungs-Faserstück weist einen Kern 3 und einen Mantel 4 auf. Der Kern 3 enthält ein laseraktives Material, z.B. eine Erbium-Verbindung. Das Pumplicht wird von dem Pumplaser 1 seitlich durch den Mantel 4 in den Kern 3 eingestrahlt; dadurch werden Lichtsignale, die aus einem Lichtwellenleiter in das Lichtsignalverstärkungs-Faserstück 2 gelangen, in dem Kern 3 verstärkt.

Zwischen dem Pumplaser 1, in Gegenstandsweite von diesem entfernt, und dem Lichtsignalverstärkungs-Faserstück 2 ist als optische Einrichtung eine Konvexlinse 6 geordnet. Im Brennpunkt der Konvexlinse 6 liegt vorzugsweise der Kern 3, um eine möglichst hohe Ausbeute des Pumplichts für die optische Verstärkung zu gewährleisten.

In Strahlrichtung des Pumplichts hinter dem Lichtsignalverstärkungs-Faserstück 2 ist ein Spiegel 5 angeordnet. Pumplicht, das den Kern 3 durchstrahlt hat, ohne in ihm absorbiert zu werden, sowie auch Pumplicht, das entweder den Mantel 4 oder ausschließlich den Zwischenraum zwischen dem Pumplaser 1 und dem Spiegel 5 durchstrahlt hat, wird durch den Spiegel 5 reflektiert und auf den Kern 3 fokussiert. Der Spiegel 5 ist beispielsweise parabelförmig gekrümmt. Der Brennpunkt der durch die Krümmung gebildeten Parabel fällt vorzugsweise mit dem Mittelpunkt des Kerns 3 zusammen.

Ein anderes Ausführungsbeispiel des optischen Verstärkers ist in Fig. 2 dargestellt. Das Lichtsignalverstärkungs-Faserstück 2 bildet hier eine wendelförmige Aufwicklung, der durch einen zylindrischen Außenmantel 7 Festigkeit verliehen wird. Der zylindrische Außenmantel 7 weist auf seiner Innenseite eine wendelförmige Nut 8 zur Aufnahme der wendelförmigen Aufwicklung des Lichtsignalverstärkungs-Faserstücks 2 auf.

In dem durch die wendelförmige Aufwicklung und den zylindrischen Außenmantel 7 gebildeten Innenraum ist wieder der Pumplaser 1 angeordnet. Als optische Einrichtung ist hier eine Konkavlinse 9 vorhanden, die dazu dient, das Pumplicht auf alle in Längsrichtung nebeneinander liegende Abschnitte des Lichtsignalverstärkungs-Faserstücks 2 jeweils seitlich durch den Mantel 4 in den Kern 3 einzustrahlen. Das Lichtsignalverstärkungs-Faserstück 2 ist beispielsweise in der Nut 8 an den zylindrischen Außenmantel 7 angeklebt, oder es wird durch einen für das Pumplicht durchlässigen zylindrischen Innenmantel 10 an die zylindrische Außenmantel 7 angedrückt.

Zwischen der zylindrischen Außenmantel 7 und dem zylindrischen Innenmantel 10 sind die von dem Lichtsignalverstärkungs-Faserstück 2 freigelassenen Hohlräume 11 vorzugsweise von einer Immersionsflüssigkeit aufgefüllt, deren Brechungsindex zwischen dem des Mantels 4 des Lichtsignalverstärkungs-Laserstücks 2 und dem des zylindrischen Innenmantels 10 liegt. Dadurch läßt sich das in die Hohlräume 11 eingestrahlte Pumplicht mit geringen Reflexionsverlusten jeweils auf den Kern 3 bündeln.

Darüber hinaus hat die Nut 8 vorzugsweise einen parabelförmigen Querschnitt, um Pumplicht auf den Kern 3 zu reflektieren und auf ihn zu fokussieren. Auch ein kreisförmiger Querschnitt, der den doppelten Radius hat wie das Lichtsignalverstärkungs-Faserstück 2, ist für die Nut 8 geeignet. Vorzugsweise ist die Nut 8 auch verspiegelt.

Neben dem Pumplaser 1 lassen sich, wie Fig.

3 zeigt, weitere Pumplaser 12, 13, 14 vorsehen, die eine kreisförmige Anordnung 15 bilden. Die Anordnung 15 befindet sich in der Mitte eines durch die wendelförmige Aufwicklung gebildeten Innenraums, ihr Mittelpunkt auf der Mittelachse des Innenraums. Dadurch lassen sich alle Abschnitte des Lichtsignalverstärkungs-Faserstücks 2 gleichzeitig mit Pumplicht bestrahlen. Bei Ausfall eines der Pumplaser 1, 12 - 14 wird die Verstärkung in dem Lichtsignalverstärkungs-Faserstück nur geringfügig kleiner. Die Zuverlässigkeit des optischen Verstärkers wird dadurch erhöht.

Da das Lichtsignalverstärungs-Faserstück 2 bei der hier gewählten Anordnung keine besonderen Lichtführungseigenschaften bezüglich des Pumplichtes aufweisen muß, kann es für die Übertragung der Lichtsignale optimiert werden.

**Patentansprüche**

1. Optischer Verstärker mit einem Lichtsignalverstärkungs-Faserstück (2), das einen Lichtsignale verstärkenden Kern (3) und einen den Kern (3) umgebenden Mantel (4) aufweist, und einem Pumplaser (1) zum Einstrahlen von Pumplicht in das Lichtsignalverstärkungs-Faserstück (2), **dadurch gekennzeichnet,** daß der Pumplaser (1) so angeordnet ist, daß das Pumplicht seitlich in das Lichtsignalverstärkungs-Faserstück (2) durch den Mantel (4) in den Kern (3) einstrahlbar ist.

2. Optischer Verstärker nach Anspruch 1, dadurch gekennzeichnet, daß in Strahlrichtung des Pumplichts hinter dem Lichtsignalverstärkungs-Faserstück (2) ein Spiegel (5) vorhanden ist, durch den das an ihm reflektierte Pumplicht auf den Kern (3) des Lichtsignalverstärkungs-Faserstücks (2) fokussierbar ist.

3. Optischer Verstärker nach Anspruch 1 oder 2, dadurch gekennzeichnet, daß zwischen dem Pumplaser (1) und dem Lichtsignalverstärkungs-Faserstück (2) eine optische Einrichtung angeordnet ist, durch das das Pumplicht auf den Kern (3) des Lichtsignalverstärkungs-Faserstücks (2) fokussierbar ist.

4. Optischer Verstärker nach Anspruch 1, dadurch gekennzeichnet, daß mindestens ein weiterer Pumplaser (12) zur seitlichen Einstrahlung von Pumplicht in den Kern (3) des Lichtsignalverstärkungs-Faserstücks (2) vorhanden ist.

5. Optischer Verstärker nach einem der Ansprüche 1 bis 3, dadurch gekennzeichnet, daß das Lichtsignalverstärkungs-Faserstück (2) eine wendelförmige Aufwicklung bildet, daß der Pumplaser (1) in einem durch die wendelförmige Aufwicklung gebildeten Innenraum angeordnet ist und daß das Pumplicht auf benachbarte Abschnitte des Lichtsignalverstärkungs-Faserstücks (2) jeweils seitlich in den Kern (3) einstrahlbar ist.

6. Optischer Verstärker nach Anspruch 4, dadurch gekennzeichnet, daß das Lichtsignalverstärkungs-Faserstück (2) eine wendelförmige Aufwicklung bildet, daß die Pumplaser (1, 12 - 15) in einem durch die wendelförmige Aufwicklung gebildeten Innenraum angeordnet sind und daß das Pumplicht auf benachbarte Abschnitte des Lichtsignalverstärkungs-Faserstücks (2) jeweils in die Längsseite des Kerns (3) einstrahlbar ist.

7. Optischer Verstärker nach Anspruch 5 oder 6, dadurch gekennzeichnet, daß er einen zylindrischen Außenmantel (7) mit einer wendelförmigen Nut (8) auf seiner Innenseite zur Aufnahme der wendelförmigen Aufwicklung des Lichtsignalverstärkungs-Faserstücks (2) aufweist.

8. Optischer Verstärker nach Anspruch 7, dadurch gekennzeichnet, daß zum Festhalten der Lichtsignalverstärkungs-Faserstücks (2) in der Nut (8) ein für das Pumplicht lichtdurchlässiger zylindrischer Innenmantel (10) auf der Innenseite des zylindrischen Außenmantels (7) vorhanden ist.

9. Optischer Verstärker nach Anspruch 8, dadurch gekennzeichnet, daß Hohlräume (11) zwischen dem zylindrischen Außenmantel (7), dem Lichtsignalverstärkungs-Faserstück (2) und dem zylindrischen Innenmantel (10) von einer Immersionsflüssigkeit aufgefüllt sind.

10. Optischer Verstärker nach einem der Ansprüche 7, 8 oder 9, dadurch gekennzeichnet, daß die Nut (8) einen parabelförmigen Querschnitt aufweist, so daß das an ihr reflektierte Pumplicht auf den Kern (3) des Lichtsignalverstärkungs-Faserstücks (2) fokussierbar ist.

FIG.1

FIG.2

FIG.3

Europäisches Patentamt

# EUROPÄISCHER RECHERCHENBERICHT

Nummer der Anmeldung

EP 92 10 3244

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 911 172 (J.L.HUGHES) <br> * Seite 5, Zeile 32 - Zeile 27; Abbildungen 1-3 * | 1,4 | H01S3/094 <br> H01S3/06 |
| Y | | 1-7,9,10 | |
| | --- | | |
| Y | US-A-4 829 529 (J.O.KAFKA) <br> * Spalte 2, Zeile 46 - Spalte 3, Zeile 45; Abbildungen 1-3 * | 2,3 | |
| | --- | | |
| Y | US-A-3 273 072 (C.J.KOESTER ET AL.) <br> * Spalte 2, Zeile 38 - Zeile 61; Abbildungen 1,6 * <br> * Spalte 6, Zeile 11 - Zeile 29 * | 1,2,5,6 | |
| | --- | | |
| Y | US-A-4 338 570 (N.A.KURNIT) <br> * Spalte 5, Zeile 49 - Spalte 6, Zeile 15; Abbildungen 1-5 * | 5-7,10 | |
| | --- | | |
| Y | DE-A-2 542 652 (SIEMENS) <br> * Ansprüche 1-4; Abbildungen 1,2 * | 4-6,9 | |
| | --- | | RECHERCHIERTE SACHGEBIETE (Int. Cl.5) |
| Y | INSTRUMENTS & EXPERIMENTAL TECHNIQUE <br> Bd. 20, Nr. 2/2, März 1977, <br> Seiten 535 - 537; <br> V.P.KONAREV ET AL.: 'PARAMETERS OF A CONICAL FIBER OPTICS QUANTUM AMPLIFIER (OQA)' <br> * Abbildung 2 * | 1,2,5,6,9 | H01S |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 26 JUNI 1992 | MALIC K. |